# EUROPEAN PATENT APPLICATION

(11) **EP 1 429 240 A1**
(43) Date of publication of application: **16.06.2004**
(21) Application number: 02022453.1
(22) Date of filing: 04.10.2002
(51) Int. Cl.: G06F 9/44

(54) **Method and device for generating distributed JAVA applications by means of a central XML configuration file**

(71) Applicant: Swiss Reinsurance Company, 8022 Zurich (CH)
(72) Inventor: Schenk, André, 4055 Basel (CH)
(74) Representative: Becker Kurig Straus

(57) **Abstract**

There is disclosed a method and a device for generating distributed applications for each level in a multi-level database environment, comprising:
- receiving an integrated configuration code comprising code sections for all information required for generating an application in each of said levels,
- parsing all code sections in said integrated configuration code required for at least one level of said multi-level environment,
- extracting said parsed code sections for said at least one level, and
- converting said extracted code sections into level-specific application code for each extracted level.

## Description

The present invention relates to the generation of distributed applications in a multi tier or multi level environment, preferably in databases. It also relates to the generation of object oriented, distributed JAVA applications.

Distributed applications are further and more developed versions of typical Client - Server applications. The main advantage of such a distributed architecture also known as n-tier or multi tier applications is the clear separation of the individual layers (tiers). Those tiers are generally comprised of a database server for maintaining persistent data, an application server for executing an object logic or business logic, a WEB server for preparing the presentation and a Client Application for presentation to the user and user interaction.

Such architecture is described in United States Patent 5,212,787. This document discloses a method for accessing a relational database outside an object-oriented environment, without exiting this environment. This access to the relational database is performed by a translator application for providing application protocol interfaces between the object-oriented environment and the relational database.

One problem with such architectures is the added complexity the application developer has to deal with. In the development process of a classical Client - Server application, the developer has a graphical development tool and directly accesses the database data. This simplifies the process because the developer has to deal with only 2 layers and not 3 or more.

In many cases during the development of n-tier distributed applications, several types of Client applications are to be implemented. Typically one application is a fully-fledged JAVA Client with a Graphical User Interface (GUI) and the other is a slick WEB Browser based application. The data to process have to be sent to the WEB - or Application Server. When data have been sent to the WEB Server, they have to be processed - translated for the Application Server. The Application Server then executes the object logic or business logic and creates the statements to query the database. Due to the great complexity of the architecture, application developers are often puzzled and fail.

It is therefore desirable to have a method and device to simplify the generation of applications in all tiers of a multi tier environment.

According to one aspect of the invention, a method is provided to generate applications in all tiers of a multi tier environment. The method comprises accessing an integrated configuration code comprising code sections for all information required for generating an application in each of said levels. Said information comprises data, commands, definitions, layout and the like. The access can be implemented e.g. by receiving, retrieving, generating by user input, and re-working a previously stored integrated configuration code. In the configuration code all sections required for at least one application in at least one level of said multi-level environment are then parsed. The parsed code sections are extracted for said at least one level, and converted or translated into level-specific application code for each level.

In an example embodiment of the present invention the method further comprises identifying all code sections required for at least one level of said multi-level environment in said integrated configuration code.

In another example embodiment the said level-specific application code is a JAVA code. The Java code provides a possibility to program an application independent of the actually used hardware, providing an application that can be run on nearly every server-, middle ware or client device in the tiers. So the generated application requires no additional information of the available application program interfaces or other proprietary characteristics of the devices the application is generated for. Therefore, the integrated configuration code can economize all device or platform specific information.

Another example embodiment of the method further comprises sending or transmitting said level-specific applications to devices in said multi level environment.

According to another aspect of the present invention a method for generating an integrated configuration code is provided. The generation of the integrated configuration code comprises receiving at least one representation of a database table of a database. Said at least one representation defines an object such as a business object in the database. This can be done e.g. by user input and the like. After that, all meta-information of the at least one database table represented by said least one representation is retrieved from the database that said table is stored in. The meta-information comprises information of the contents and additional information about it such as attributes and relations of said at least one database table. The meta information can comprise information about relations of the database table to other (even not listed) database tables. The tables and the meta information are used to generate an integrated configuration code. The integrated configuration code comprises code sections for all meta information retrieved from said database, which is required for generating an application in each of said tiers. The configuration file comprises all information required to map said object defined by said representations of tables to said configuration file. The configuration file can be processed or revised to change and vary the relations and content of said object. The integrated configuration file defines said object and its masks, including the object logic (e.g. business logic) like validation, presentation such as format, communication between the different tiers and the storage on the database. Said components of the configuration file that can not be derived from the database, have to be generated from other previously generated configurations files, from libraries or via user input.

In an example embodiment said integrated configuration code is an XML (Extensible Markup Language) file. By using an XML file the configuration code can be generated and processed independently of the actually used device. Another advantage is that XML provides a portable data and code format, which is easy to use. The integrated configuration XML file offers the possibility to code data such as the contents of an object and data objects together with program sections and configuration of the presentation of said object and data objects.

The invention allows the developer to maintain all aspects in one place and to generate an implementation. The developer can create a skeleton multi tier application without programming effort, as the integrated configuration file is generated automatically. He can concentrate on the implementation of the application specific behavior by enhancing the generated skeleton provided by the XML configuration file.

The gist idea behind the invention comprises that every object e.g. a business object can be mapped to a database table. Therefore, it is also possible to describe this mapping in a configuration file. This is achieved according to one aspect of the invention by using a generator that takes one or more database tables as argument and creates a base configuration file by reading the meta information from the database for the specified tables.

The configuration file can also be used to configure the presentation of an object. In other words, it can be specified how to format the value of an Attribute, how to validate the value, what visual form and size the GUI component has (Textfield, Checkbox, Dropdown, Menu...). Furthermore it is possible to specify labels and other aspects in the configuration file without actually programming in JAVA. All this information describes an entity, which is in fact the blue print to dissolve or disintegrate an object.

The invention uses and leverages the following technologies : JAVA, XML and JSP (Struts).

Java is an object-oriented and platform independent program language, used for the generated applications. SWING is a graphical user interface class library, such as ATW for generating user interfaces in a Java environment, instead of using SWING any other standard GUI library like ATW can be used for generating the GUIs of applications. JDBC (Java Database Connectivity) is a Java-API (Application program interface) for executing of SQL (Structured Query Language) orders used in relational databases. JDBC can be utilized in every application having direct access to a SQL database. XML (Extensible Markup Language) is used for the configuration file. The extensibility of XML enables it to store data and XML provides Parsers, DTD (Document Type Definition) to convert the XML file to JAVA applications. JAVA Server Pages (JSP) is used to generate GUIs for Internet and HTML applications. The JSPs can e.g. be generated with STRUTS, an open source framework of utilizing pre-stored design patterns to facilitate the development of JSP applications.

When the developer finally has specified all needed information for an entity, the necessary code files can be generated.

The resulting files per Entity are:
1. Java Class Source files
   - Swing Panel
   - Swing Table
   - Client Object
   - Server Object
   - Data object of the Object Logic
   - Struts Action
   - Struts Form
2. JSP (Java Server Pages) Pages
   - Presentation of the Object

   According to yet another aspect of the invention, a software tool is provided comprising program code means for carrying out the method of the preceding description when said program product is run on a computer or a network device.
   According to another aspect of the present invention, a computer program product downloadable from a server for carrying out the method of the preceding description is provided, which comprises program code means for performing all of the steps of the preceding description when said program is run on a computer or a network device.
   According to yet another aspect of the invention, a computer program product is provided comprising program code means stored on a computer readable medium for carrying out the methods of the preceding description, when said program product is run on a computer or a network device.
   According to yet another aspect, the present invention provides a computer device for generating distributed applications for each level in a multi-tier environment. The computer device comprises a reception module, a controller, a user interface and a network module. The reception module is required, to receive an integrated configuration code comprising code sections for different levels of a multi level environment. The controller, is connected to said reception module, and is configured to parse, identify, extract and convert code sections of said integrated configuration code into level-specific application code for each tier in said environment. The user interface is connected to said controller, to extend and revise said integrated configuration code. The network module is connected to said controller, to transfer said generated level-specific application code to other devices in a network.
   In the following, the invention will be described in detail by referring to the enclosed drawings in which:
   Figure 1 is a block diagram depicting a multi tier environment,
   Figure 2 is a block diagram, depicting an example of the generation of an XML configuration file,
   Figure 3 is a simple example for the mapping of database information to an XML file,
   Figure 4 is an example of an XML entity configuration file,
   Figure 5 is an example of an XML attributes configuration file,
   Figure 6 is an example of an XML relation configuration file,
   Figure 7 is a block diagram, depicting an example of the generation of applications in a multi tier environment form an XML configuration file,
   Figure 8 is an example of a swing screen implementation of a business object,
   Figure 9 is an example of a swing table implementation of a table,
   Figure 10 is an example of an implementation for validation and notification of interactions with a business object,
   Figure 11 is an example of an implementation for holding the data of a business object,
   Figure 12 is an example of an implementation of a hook to execute a server side business logic of a business object,
   Figure 13 is block diagram, depicting an example of the bindings between a graphical user interface and data,
   Figure 14 to 17 describe an example of a synchronization process of data objects between a client and a server,
   Figure 18 to 22 are examples of properties for the different properties of the code used in the aforementioned generation processes

In other instances, detailed descriptions of well-known methods, interfaces, devices, and signaling techniques are omitted so as not to obscure the description.

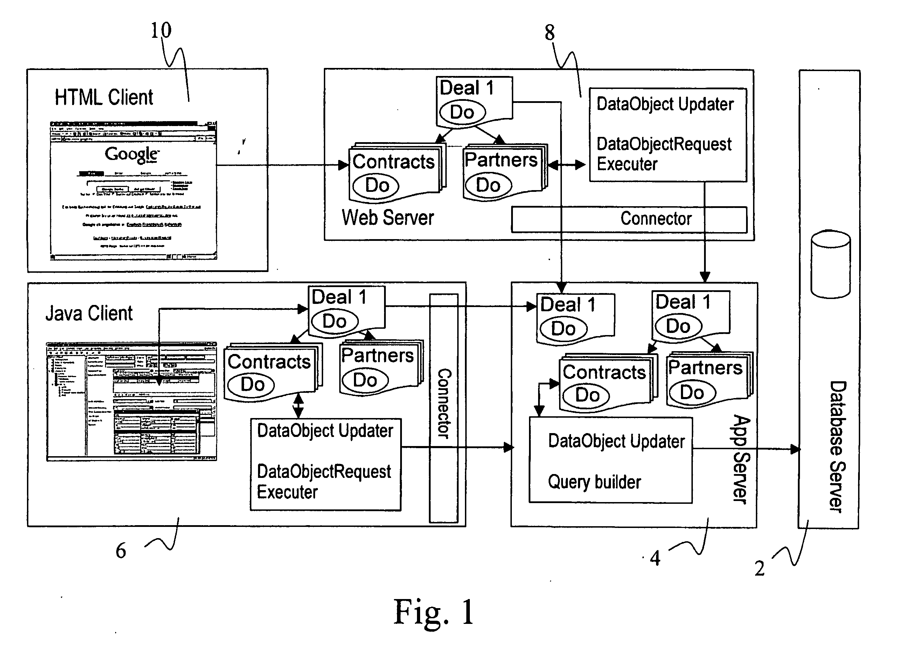

Figure 1 is a block diagram depicting an overview of the typical multi tier environment architecture. Distributed applications are further and more developed versions of typical Client - Server Applications. The main advantage of such a distributed architecture also known as n-tier or multi tier applications is the clear separations of the individual layers (tiers). The depicted multi level or multi tier environment is comprised of a Database Server 2 an Application server 4, a Client Application 6, a Web Server 8 and a HTML (Hypertext Markup Language) Client 10. The Database Server 2 represents the first or lowest tier of the multi tier environment. The Database Server 2 is for maintaining persistent data, and physically stores the data of a database in form a tables, entries, attributes, relations and other meta information. The Database Server utilizes a database server application to retrieve the physically stored data and to exchange data with the Application Server 4.

The Application Server 4 forms the second tier of the environment. The Application Server 4 forms the link between Database server 2 and the Client Application 6 and the Web Server 8 respectively. The Application Server 4 is for executing a object logic or business logic, and generates queries to query the data stored in the Database Server 2 according to requests received from the Client 6 and the Web Server 8. The requests can comprise read out operations to retrieve information stored in the database or write operations to change the content of the database. To execute the read out operations, the Application Server 4 comprises a query builder application and a data object updater to execute write operations corresponding to requests received from the Client 6 or the Web Server 8. To execute the communication and to handle the different protocols between the Database Server 2, the Web Server 8 and the Client 6 the Application Server 4 uses an application server application.

Client 6 is connected to the Application Server 4 to send data object requests to and to update data objects in the Database Server 2. The Client 6 forms the third tier. The Client 6 comprises a graphical user interface (GUI) for presentation and user interaction to simplify the database access. The GUI and the data exchange with the Application Server 4, is executed by means of a client application running on a user terminal.

The Web server 8 is connected to the Application Server 4 to exchange data object requests and data objects between the Database Server 2 and the HTML Client 10. The Web Server 8 is for preparing presentations and forms the fourth tier in the environment. The Web server 8 comprises a data object updater and a data request executor to interpret the different protocols and to forward requests between the HTML Client 10 and the Application Server 4. The data exchange and the interpreting are executed by means of a web server application.

The HTML Client 10 is connected to the Web server 8 to exchange data and to provide database access via the Web. The HTML Client 10 forms the fifth tier in the environment. The HTML Client 10 transforms the HTML code received from the Web Server 8 to a web page as a graphical user interface for presentation and user interaction. The web page has to be defined as a HTML graphic application.

To provide all these applications, the database server application, the application server application, the client application, the web server application and the HTML graphic application has to be generated. The problem high complexity the application developer has to deal with.

In many cases during the development of n-tier distributed applications, several types of Client applications have to be implemented. Typically one application is a full-fledged JAVA Client (Client 6) with a GUI and the other is a slick WEB Browser based application (Web Server 8). The data to be processed have to be sent to the WEB 8 - or Application Server 4. When data has been sent to the WEB Server 8, they have to be processed - translated for the Application Server 4. The Application Server 4 then executes the object logic or the business logic and creates the statements to query the database Server 2. Due to the great complexity of the architecture, even small errors lead to a failures in the interaction between the different tiers.

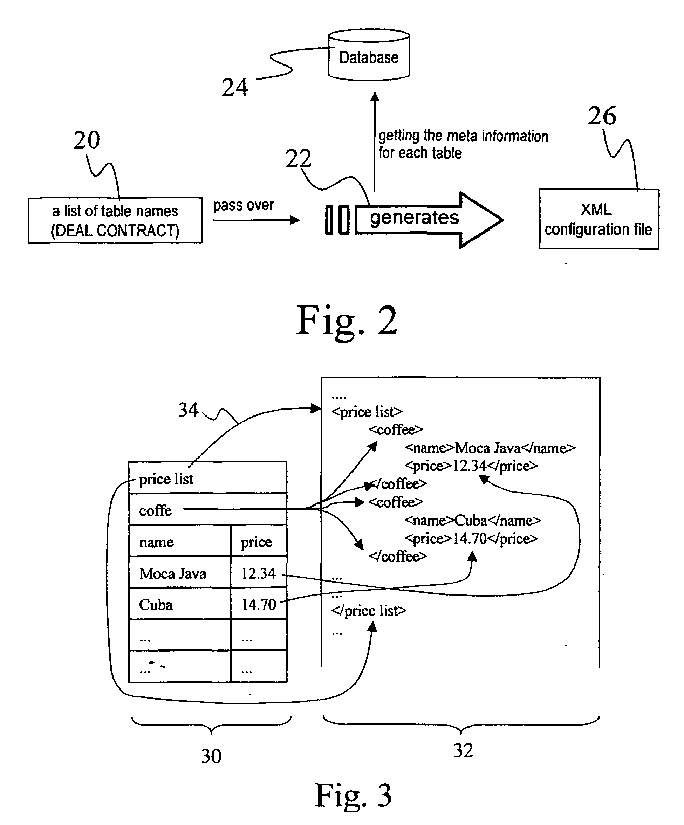

Figure 2 is a block diagram, depicting an example of the generation of an XML configuration file 26. The method basically comprises two more or less independent sub-elements, the generation of the applications form a fully integrated configuration code, and the generation of the configuration code by means of meta information of a database and the application specific requirements. The latter is depicted and described in figure 2. Both sub methods contribute to simplify the generation of applications in a multi tier environment.

To generate a fully integrated configuration file 26 for generating distributed JAVA applications for interacting with databases in a multi-tier environment having at least a server tier and a client tier, the properties of an object or a business object have to be fixed. In a relational database determining the tables 20 comprising the required information can do this. Having determined the tables 20 comprising the relevant information, the respective relations between the tables can be retrieved from the database 24 comprising this information. If the applications to be generated are designed to access existing tables of a database, it can be sufficient to determine the required tables e.g. in a list of tables 20. Additional information such as data structure can also be retrieved from the database 24. Alternatively, only single table elements and the respective relations can be determined, to generate e.g. a demo version for the application.

Based on the tables and the meta information a configuration file can be generated 22. The configuration file 26 can be generated as an XML configuration file comprising all information for the desired application. Thereby a selection of database tables or the representations of theses tables and the respective relations defining a database or business object can be mapped to a configuration file. Additional information according to the number of expected or required tiers can also be determined prior to the generation of the configuration file.

The basic idea is to define all properties in an integrated file, and generate a single composition with all information necessary to generate applications in all tiers of the environment. So not only the single properties necessary for a single application is defined, but also the whole structure of the single tiers are integrated in a single file. Basically the idea can be compared to the generation of a single part of a jigsaw puzzle by first generating a picture and cutting only the required piece from it, wherein it is guaranteed that all parts cut from the same picture are fitting, instead of generating a single part separately and hoping that there is somewhere an other part going together.

Upon passing a list of table names 20 to the entities generator 22, the generator 22 creates a default configuration file 26 (entities.xml), with the information retrieved from the database 24. To generate the integrated configuration filet the application uses XML- technology such as a Parser and DTD (Document Type Definition).

Figure 3 depicts a simple example for mapping of a database table to an XML file. The generation can be embodied as a translator translating the tables of e.g. an ODBC- or an ORACLE, or Trans-Base- database with its structure and contents to an XML file.

Starting from a simple database table 30 the entries of the table are mapped to an XML configuration file 30. The present example only describes the structure and the contents of the table without any relations between the single elements. It is to be noted that the present example is not restricted to price lists, but can also be applied to any kind of table contents, such as part tables and the like. This example is only for providing an idea of how to implement one aspect of the integrated file generator. According to the XML design rules, the name of the list forms the start <price list> and the end </price list> of the XML file section. The other properties are also forming sub-elements with additional information about the contents of the list. Due to the relatively small number of elements in the table, the mapping function between the table and selected table elements should be clear, and provide a sufficient indication of how to implement the configuration file generator. The exact implementation of the generator is dependent of the used database structure the used operation system and the computer language used to implement the generator.

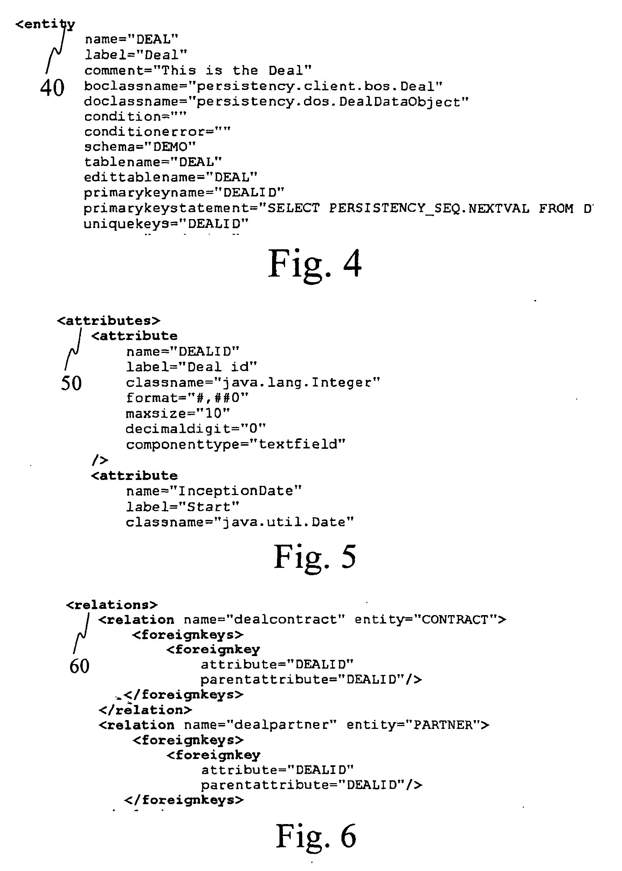

Figure 4 is an example of an XML entity configuration file section of an integrated configuration file. Entities are used to define objects or business objects of the same type. The entity configuration file (entities.xml) comprises an XML tag <entity to relate the meaning of the following text to entities.

The tag is not closed to indicate that the depicted selection is only exemplary and not limited to the depicted text. In the enclosed list defines the properties of an entity, defining a name, a label and a comment of the object. The entity is further defined by Boolean class name, a document class name, a condition possible condition errors, a signed as primary key and unique key.

Figure 5 is an example of an XML attributes configuration file. Attributes define the properties of an object or a business object. As in the description of Figure 3 and 4 the file section starts with an XML tag 50 <attributes> identifying the following text as attributes. The first attribute relates the label "Deal id" to the name "DEALID". In the following the class name, the format and the maximum number of digits of the entity is defined. The next attribute tag defines the attributes of the entity "inspection date".

Figure 6 is an example of an XML relation configuration file. Relations indicated by the XML tag 60 <relation> express the joins when storing or loading objects or business objects. In the figure the entity "CONTRACT" with the name "dealcontract" is allocated to the parent attribute "DEALID". Similarly, the entity "PARTNER" with the name "dealpartner" is allocated to the parent attribute "DEALID". Other attribute types are descriptors, identificators, optional descriptors and other functionality can also be defined or fixed.

Th entities, the attributes and the relations can be extracted from the meta information stored in the database. The configuration file itself can be automatically generated, if the only the database tables are determined, and the respective meta information is retrieved from the database.

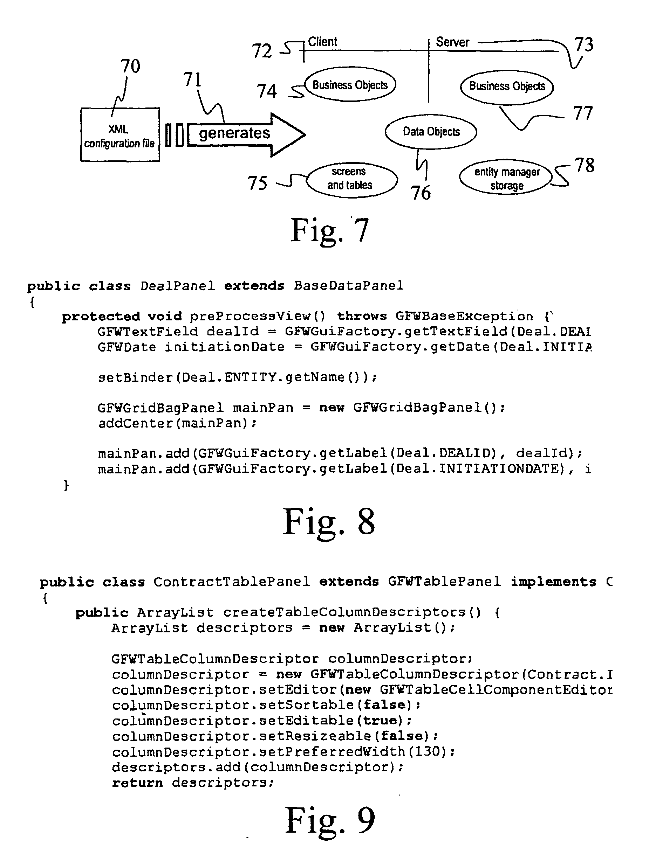

Figure 7 is a block diagram, depicting an example of the generation of applications in a multi tier environment form an XML configuration file. As discussed in figure 2, the method basically comprises two more or less independent sub-elements, the generation of the applications form a fully integrated configuration code, and the generation of the configuration code by means of meta information of a database and the application specific requirements. The former method is depicted and described in figure 7.

With the entity and attribute and relation information defined in the XML configuration file 70, the framework generates 71 base classes for the applications in all tiers of the multi tier environment. On the Client side 72 the applications for objects or business objects 73 and for screens and tables 75 are generated. On the server side 73 applications for objects or business objects 77 and for the entity manager storage 78 are generated. The generator 71 also generates middleware applications for data objects 76.

The generation of the application can use an extended version of JAXB (Java Architecture for XML binding) to map the XML elements to classes in the Java programming language. Standard JAXB is not capable of identifying the relevant section in the XML file necessary for the single applications in each tier. Therefore it is necessary to provide an additional feature or tool to parse, identify and extract, the relevant code sections in the XML file prior to the generation of the Java applications.

The basic idea is to generate a single composition with all information necessary to generate applications in all tiers of the environment. Basically, the idea can be compared to the generation of a jigsaw puzzle by first generating a picture and cutting it into pieces, wherein it is guaranteed that all parts are fitting, instead of generating each part separately and hoping that they would go together.

Figure 8 is an example of a swing screen implementation of a business object. The, swing screen implementation is provided as an examplary gridbag layout, binding visual components with data to the corresponding objects or business objects. SWING is a graphical user interface class library, such as ATW for generating user interfaces, instead of using SWING any other standard GUI library like ATW can be used for generating the GUIs of applications. The client interprets the depicted swing screen as to display a protected void for user input and to retrieve the initiation date of the object deal following to the input on the input of an object identification (dealid). All the depicted code section of the swing screen example can be directly generated from the XML configuration file.

Figure 9 is an example of the implementation of a database table as a swing table code. With default renderers and editors, columns are defined as (non-) sortable, editable, (non-) resizable, preferred- min- max number of characters and the like. All the depicted code section of the swing table example can be directly generated from the XML configuration file.

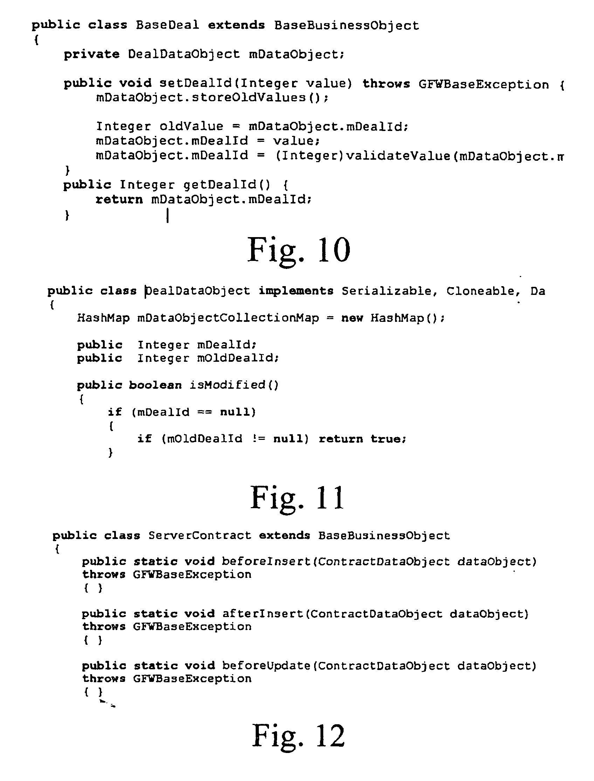

Figure 10 is an example of an implementation for validation and notification of interactions with an object or a business object. Object or business objects for Client side validation, register listeners to be notified if the object or business object has changed.

Figure 11 is an example of an implementation for holding the data of an object or a business object. Data objects for holding the data of an object or a business object will be send to the Server if modified. The swing implementation has some help methods like "isModified()".
Figure 12 is an example of an implementation of a hook to execute a server side object logic or business logic of an object or a business object. It is provided by static methods without any state.

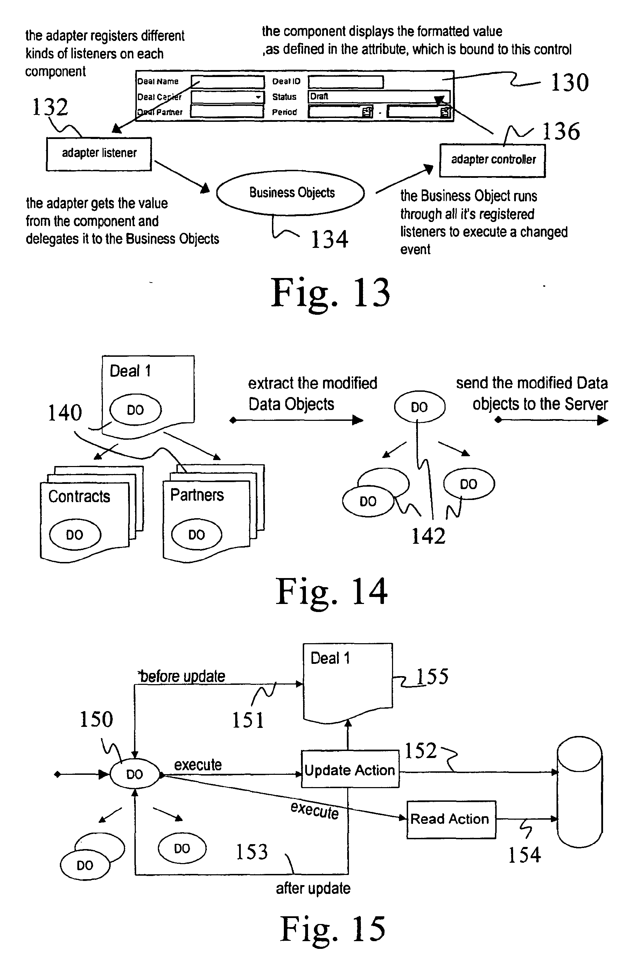

Figure 13 is block diagram, depicting an example of the bindings between a graphical user interface and data. The block diagram demonstrates how data of an object or a business object interacts with the presentation layer. This is done using the MVC (Model, View, Controller) Pattern, which was implemented by the code generator when the panel was generated.

The depicted graphical user interface (GUI) 130 comprises different component for receiving user input and displaying data. Each of the input components is registered by an adapter 132 to respective listeners. In case of a user input to the receiving components of the GUI 130, the adapter gets the value from the component and delegates it to the object or the business object 134. The object 134 runs through all its registered listeners to execute a changed event. The changed event is received by adapter controller 136 which in turn controls a component to display in the GUI 130 a formatted value according to an attribute which is bound to the is control.

Figure 14 to 17 describe an example of a synchronization process of data objects between a client and a server.

Figure 14 depicts an object 140 with data objects changed by a Client. The client application extracts the changed or modified data objects 142 from the object 140 and sends the extracted modified data objects 142 to the server.

Figure 15 depicts the reaction of the server on the reception of the modified data objects. Each received modified data object 150 is first assigned 151 to a database table 155, to determine if the data object is assignable, the value oft the data object has changed. Than an update action 152 is executed, said update action comprises the updating 152 of persistent data in storage and in table 155. To confirm the update, the changed data are a read out 154 from in the storage, and the updated data objects are returned to the client.

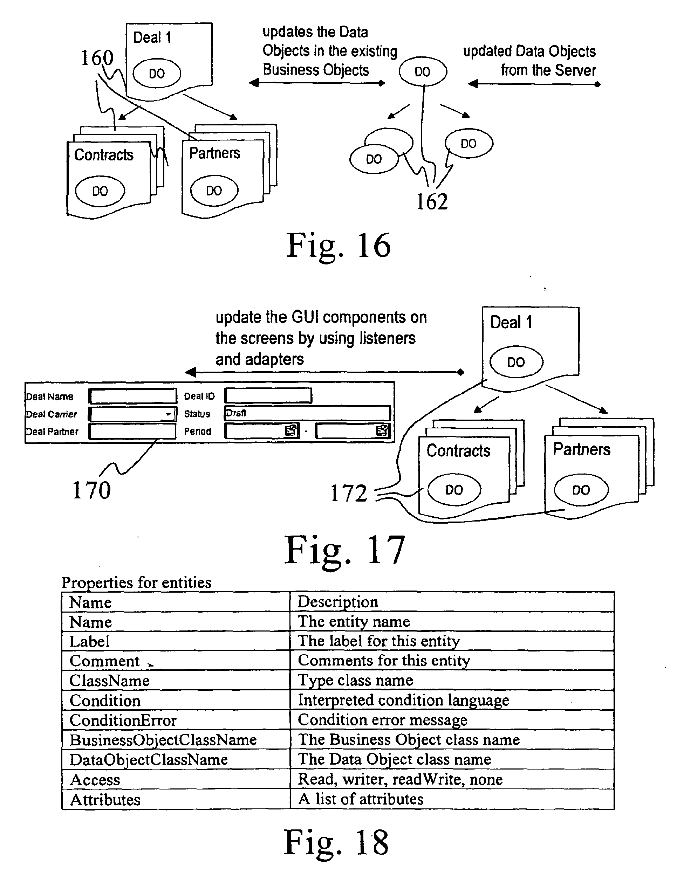

Figure 16 depicts the reaction of the client to the reception of the updated data objects 162 from the server. Updating the data objects 162 in the tables of the object 160 performs the updating.

Figure 17 depicts the reaction of the client to the updated object 172. The updated objects 172 are used to update the GUI components 170 on a display of the Client. Following the updating process, the all data objects the updated and the unchanged data objects specified by the GUI and the object are displayed. The updating of the GUI component 170 is executed by using listener and adapter applications.

All the above applications necessary to provide the interactions between the Client and the Server can be generated from a single XML file specifying the object itself, the GUI the Extract and update processes and the properties of the data objects. In summary, Figures 14-17 demonstrates how data from one ore more Clients are synchronized with the database without having to write specific code by the application developer.

Figure 18 to 22 are examples of properties for the different properties of the code used in the aforementioned generation processes.

Figure 18 describes properties for entities, such as names, labels and comments for an entity. Other properties are related to type and handling of the entity, the type of data, the language the entity has to be interpreted with, a condition for an error message, an object class name, a data object class name, the type of access to be granted an a list of attributes in the entity.

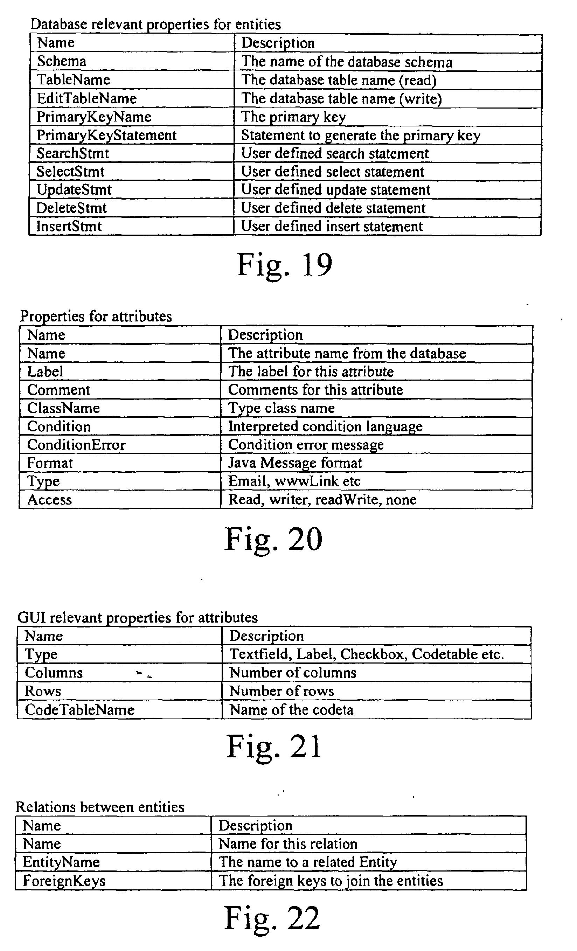

Figure 19 describes database relevant properties for entities. Such as names for a schema, a write and read table, primary keys, and statements to generate a primary key, to search, select, update, delete and insert data objects in the database.

Figure 20 describes a selection of properties for attributes.

Figure 21 describes GUI relevant properties for attributes. The GUI relevant attributes are used to arrange data in or as a texfield, a label, a check box, an icon, a code table etc. Tabled depicted in the GUI can be arranged by defining the number of rows and columns, and a code table name can be used to name a table.

Figure 22 describes relations between entities. The name of a relation and the EntityName should be clear to describe the relation itself and the entities associated by said relation. The foreignkeys are used to define the keys to join the entities. The foreign keys are used to implement the different relationships in the meta information of the database in the configuration file. In figure 6 only the relation "parent attribute" is shown, but other relations can also be defined as 1:1, I:n or n:m relations, optional and restricted relations and relation between one two or more tables.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

## Claims

1. Method for generating distributed applications for each level in a multi-level database environment, comprising:
- receiving an integrated configuration code comprising code sections for all information required for generating an application in each of said levels,
- parsing all code sections in said integrated configuration code required for at least one level of said multi-level environment,
- extracting said parsed code sections for said at least one level, and
- converting said extracted code sections into level-specific application code for each extracted level.

2. Method according to claim 1, wherein said parsing step comprises identifying all code sections in said integrated configuration code required for at least one level of said multi-level environment

3. Method according to claim 1, wherein said level-specific application code is a JAVA code.

4. Method according to claim 1, further comprising sending said level-specific application code to a device in said multi level database environment.

5. Method for generating an integrated configuration code in a multi-level database environment, comprising:
- receiving at least one representation of a database table of said database,
- retrieving all meta-information of said database table represented by said least one representation from said database, said meta-information comprising information related to the contents of and additional information about said at least one database table,
- generating an integrated configuration code comprising code sections for all meta information retrieved from said database.

6. Method according to anyone of the preceding claims, wherein said integrated configuration code is an XML file.

7. Software tool comprising program code means stored on a computer readable medium for carrying out the method of anyone of claims 1 to 6 when said software tool is run on a computer or network device.

8. Computer program product comprising program code means stored on a computer readable medium for carrying out the method of anyone of claims 1 to 6 when said program product is run on a computer or network device.

9. Computer program product comprising program code, downloadable from a server for carrying out the method of anyone of claims 1 to 6 when said program product is run on a computer or network device.

10. Network device for generating distributed applications for each level in a multi-level environment comprising
- a reception module, to receive an integrated configuration code comprising code sections for different levels of a multi level environment,
- a controller, being connected to said reception module, and being configured to parse, extract and convert code sections of said integrated configuration code into level-specific application code for each level,
- a user interface, connected to said controller, to revise said integrated configuration code,
- a network module connected to said controller, to transfer said level-specific application code to other devices in a network.
